(19) Europäisches Patentamt / European Patent Office / Office européen des brevets

(11) **EP 4 804 249 A1**

(12) **EUROPEAN PATENT APPLICATION**
published in accordance with Art. 153(4) EPC


(43) Date of publication:
**09.09.2026 Bulletin 2026/37**

(21) Application number: **24809541.6**

(22) Date of filing: **28.10.2024**

(51) International Patent Classification (IPC):
***H01M 4/36*** *(2006.01)* ***H01M 4/58*** *(2010.01)*

(52) Cooperative Patent Classification (CPC):
Y02E 60/10

(86) International application number:
**PCT/CN2024/127764**

(87) International publication number:
**WO 2026/085899 (30.04.2026 Gazette 2026/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2024 CN 202411499539**



(71) Applicant: **Hubei Wanrun New Energy Technology Co., Ltd.**
**Shiyan, Hubei 442500 (CN)**

(72) Inventors:
- **PENG, Tangping**
  **Shiyan, Hubei 442500 (CN)**
- **LV, Fei**
  **Shiyan, Hubei 442500 (CN)**
- **SHI, Zhixiang**
  **Shiyan, Hubei 442500 (CN)**

(74) Representative: **Manitz Finsterwald Patent- und Rechtsanwaltspartnerschaft mbB**
**Ganghoferstraße 29**
**80339 München (DE)**


(54) **POSITIVE ELECTRODE MATERIAL AND PREPARATION METHOD THEREFOR, POSITIVE ELECTRODE SHEET, AND SODIUM-ION BATTERY**


(57) The present application provides a cathode material, a method for preparing the same, a cathode plate, a sodium-ion battery, and an electrical device, belonging to the battery field. The cathode material includes a core and a carbon-containing coating layer coated on at least part of a surface of the core. The core contains sodium vanadium fluorophosphate. A button battery is prepared using the cathode material and is subjected to an Nth charge-discharge test. In a discharge curve of the Nth charge-discharge test, a discharge specific capacity is C0; and a discharge specific capacity of a discharge platform corresponding to a voltage of 3.3 V to 3.4 V is C1, C1/C0<6.7%, where N is an integer equal to or greater than 1. The Nth charge-discharge test is performed at 20°C to 30°C by charging the button battery at a constant current of 0.2C rate to 4.3 V and then discharging the button battery at a constant current of 0.2C rate to 2 V. The cathode material provided in the present application has relatively high discharge specific capacity and electronic conductivity.

30μm


FIG. 2

EP 4 804 249 A1

**Description**

TECHNICAL FIELD

The present application relates to the field of battery technology, particularly to a cathode material, a method for preparing the same, a cathode plate, and a sodium-ion battery.

BACKGROUND

Sodium-ion batteries (SIB), following lithium-ion batteries, represent a different type of secondary battery and have promising application prospects such as being applicable to the field of new energy automobiles. The electrochemical performance of a sodium-ion battery mainly depends on its cathode performance. Among the various cathode materials of sodium-ion batteries, sodium vanadium fluorophosphate ($Na_3V_2(PO_4)_2F_3$, NVPF) has a theoretical working voltage of about 3.85 V and a theoretical specific capacity of 128.3 mAh/g, which is a very promising cathode material for sodium-ion batteries. However, the NVPF material currently prepared in practice still have the problem of poor capacity, leading to low energy density of sodium-ion batteries. Despite having good ionic conductivity, the NVPF material exhibits poor electronic conductivity.

SUMMARY

In view of the technical problem existing in the background, the present application provides a cathode material, a method for preparing the same, a cathode plate and a sodium-ion battery, aiming to solve the problem of poor capacity and poor electronic conductivity for the NVPF material currently prepared in practice.

In a first aspect, an embodiment of the present application provides a cathode material. The cathode material includes a core and a carbon-containing coating layer coated on at least part of a surface of the core, and the core includes sodium vanadium fluorophosphate ($Na_3V_2(PO_4)_2F_3$). A button battery is prepared using the cathode material and is subjected to an Nth charge-discharge test. In a discharge curve of the Nth charge-discharge test, a discharge specific capacity is C0, and a discharge specific capacity of a discharge platform corresponding to a voltage of 3.3 V to 3.4 V is C1, C1/C0<6.7%, where N is an integer equal to or greater than 1. The Nth charge-discharge test is performed at 20°C to 30°C by charging the button battery at a constant current of 0.2C rate to 4.3 V and then discharging the button battery at a constant current of 0.2C rate to 2 V.

In the technical solution of the embodiment of the present application, C1/C0 is controlled to be less than 6.7%, indicating relatively high purity of $Na_3V_2(PO_4)_2F_3$ in the core of the cathode material and relatively low mass proportion of impurity phases such as $Na_3V_2(PO_4)_3$, so that the capacity of the cathode material and the energy density of the sodium-ion battery are effectively improved. Meanwhile, the carbon-containing coating layer in the cathode material can effectively improve the electronic conductivity of NVPF, thereby further improving the capacity of the cathode material.

In some embodiments, the cathode material satisfies at least one of the following conditions:

(1)

$$C1/C0 \le 3.5\%;$$

(2) a coverage rate of the carbon-containing coating layer on the surface of the core is 89% to 100%, preferably 95% to 100%;

(3) a porosity of the cathode material is 10% to 69%, preferably 15% to 30%.

In the technical solution of the embodiment of the present application, the porosity is within the above range, which is conducive to ensuring the intercalation and deintercalation of sodium ions and also ensuring relatively high density of the carbon-containing coating layer which facilitating to improve the compaction density of the cathode material. C1/C0 is controlled within the above range, which can ensure relatively high purity of the NVPF phase in the cathode material, thereby further effectively improving the capacity of the cathode material and the energy density of the sodium-ion battery. The coverage rate of the carbon-containing coating layer on the surface of the core is within the above range, which is conducive to improving the capacity and corrosion resistance of the cathode material, and can make the cathode material to have good electronic conductivity.

In some embodiments, a mass fraction of carbon in the cathode material is 1.25% to 6%, preferably 1.5% to 3.5%.

In the technical solution of the embodiment of the present application, the mass fraction of carbon in the cathode material is within the above range, which can enable the cathode material to have relatively higher compaction density and

electronic conductivity. The coverage rate of the carbon-containing coating layer on the surface of the core is within the above range, which is conducive to improving the capacity and corrosion resistance of the cathode material, so that the cathode material has good electronic conductivity.

In some embodiments, a compaction density of the cathode material is 1.4 g/cm$^3$ to 2 g/cm$^3$, preferably 1.53 g/cm$^3$ to 1.99 g/cm$^3$.

In the technical solution of the embodiment of the present application, the cathode material has relatively high compaction density, which is conducive to the sodium-ion battery having relatively high energy density.

In a second aspect, an embodiment of the present application provides a method for preparing a cathode material, including:

providing a mixed slurry, wherein the mixed slurry includes a sodium source, a fluorine source, a vanadium source, a phosphorus source, and a carbon source;
drying the mixed slurry to obtain a precursor; and
calcining the precursor to obtain the cathode material;
wherein the cathode material includes a core and a carbon-containing coating layer coated on at least part of a surface of the core, and the core includes sodium vanadium fluorophosphate ($Na_3V_2(PO_4)_2F_3$); a button battery is prepared using the cathode material and is subjected to an Nth charge-discharge test; in a discharge curve of the Nth charge-discharge test, a discharge specific capacity is C0, and a discharge specific capacity of a discharge platform corresponding to a voltage of 3.3 V to 3.4 V is C1, C1/C0<6.7%, where N is an integer equal to or greater than 1; and the Nth charge-discharge test is performed at 20°C to 30°C by charging the button battery at a constant current of 0.2C rate to 4.3 V and then discharging the button battery at a constant current of 0.2C rate to 2 V.

By using the preparation method provided in the present application, the core of the prepared cathode material has relatively high purity of $Na_3V_2(PO_4)_2F_3$ and relatively low mass proportion of impurity phases such as $Na_3V_2(PO_4)_3$, so that the capacity of the cathode material and the energy density of the sodium-ion battery are effectively improved. Meanwhile, the carbon-containing coating layer in the cathode material prepared with the above method can effectively improve the electronic conductivity of NVPF, thereby further improving the capacity of the cathode material.

In some embodiments, the carbon source includes at least one of citric acid, polyvinyl alcohol, glucose, sucrose, and oxalic acid, optionally includes citric acid and/or polyvinyl alcohol, and further optionally includes citric acid and polyvinyl alcohol.

Optionally, the carbon source is citric acid and polyvinyl alcohol, and a mass ratio of citric acid to polyvinyl alcohol is 2:1 to 1:4.

Optionally, the polyvinyl alcohol includes at least one of polyvinyl alcohol 2000, polyvinyl alcohol 3000, polyvinyl alcohol 4000, and polyvinyl alcohol 6000.

In the technical solution of the embodiment of the present application, when the carbon source includes citric acid and polyvinyl alcohol, the combination of citric acid and polyvinyl alcohol can produce a mutually promoting effect, thereby further improving the compaction density, which is conducive to improving the energy density of the sodium-ion battery with the cathode material.

In some embodiments, the method satisfies at least one of the following conditions:

(1) the sodium source includes at least one of sodium fluoride, sodium phosphate, sodium bicarbonate, and sodium nitrate, optionally includes sodium fluoride;
(2) the fluorine source includes at least one of sodium fluoride, ammonium fluoride, potassium fluoride, and lithium fluoride, optionally includes sodium fluoride;
(3) the vanadium source includes vanadium pentoxide and/or ammonium metavanadate;
(4) the phosphorus source includes at least one of ammonium dihydrogen phosphate, sodium phosphate, ammonium dihydrogen phosphate, diammonium hydrogen phosphate, and triammonium phosphate.

In the technical solution of the embodiment of the present application, when sodium fluoride is used as the sodium source and/or the fluorine source, fluorine can be provided simultaneously with sodium, which is conducive to reducing the input and waste of raw materials compared with the method of providing sodium and fluorine separately.

In some embodiments, the mixed slurry is prepared by a method including:

taking the sodium source, the fluorine source, the vanadium source, and the phosphorus source according to a stoichiometric ratio of $Na_3V_2(PO_4)_2F_3$, and mixing with a solvent and the carbon source to form a first slurry;
adjusting the first slurry to have a pH value of 6 to 7 by using a pH regulator, and then grinding the first slurry to obtain the mixed slurry;
optionally, the pH regulator includes at least one of aqueous ammonia, sodium hydroxide, sodium carbonate, sodium

bicarbonate, and ammonium bicarbonate, and further optionally includes aqueous ammonia.

In the technical solution of the embodiment of the present application, by using a pH regulator to adjust the pH value of the first slurry to be 6 to 7, the hydrolysis of $F^-$ in the mixed slurry can be effectively inhibited, thereby inhibiting the generation of HF, effectively reducing the loss of F, and reducing the generation of impurity phases such as sodium vanadium phosphate in a finished product, so that the purity or content of $Na_3V_2(PO_4)_2F_3$ is effectively improved, thereby improving the capacity of the prepared cathode material.

In some embodiments, the mixed slurry further includes a fluorine supplement.

Optionally, the fluorine supplement includes ammonium fluoride and/or sodium fluoride, and further optionally includes ammonium fluoride.

Optionally, a molar amount of the fluorine supplement is 1% to 5% of a molar amount of the fluorine source.

In the technical solution of the embodiment of the present application, when the mixed slurry contains the fluorine supplement, the fluorine supplement can replenish the loss part of F, thereby effectively reducing the formation of impurity phases such as sodium vanadium phosphate in a finished product, effectively improving the purity or content of $Na_3V_2(PO_4)_2F_3$, and thus improving the capacity of the prepared cathode material.

In some embodiments, a calcination temperature is 550°C to 800°C, preferably 650°C to 800°C; a time period of maintaining the calcination temperature is 3 h to 10 h, preferably 4 h to 9 h; and the calcining process is performed under a protective atmosphere. Optionally, the protective atmosphere includes nitrogen gas and/or argon gas.

In the technical solution of the embodiment of the present application, the calcination temperature or the time period of maintaining the calcination temperature is within the above respective ranges, which improves the density of the carbon-containing coating layer, and also improves the purity of $Na_3V_2(PO_4)_2F_3$ in the cathode material. If the calcination temperature is relatively low, or the time period of maintaining the calcination temperature is relatively short, it is easy to cause incomplete carbonization of the carbon source forming the carbon-containing coating layer, with low degree of graphitization, so that the prepared cathode material exhibits poor electronic conductivity and low capacity. In addition, when the calcination temperature is relatively low, the formed carbon-containing coating layer is relatively loose, leading to relatively low compaction density of the cathode material. If the calcination temperature is relatively high, or the time period of maintaining the calcination temperature is relatively long, it is easy to cause more F loss, relatively low purity of the $Na_3V_2(PO_4)_2F_3$ phase in the cathode material, and decreased capacity of the cathode material.

In a third aspect, an embodiment of the present application provides a cathode plate. The cathode plate includes the cathode material described in the first aspect of the present application or the cathode material prepared by the preparation method described in the second aspect of the present application.

In this embodiment, the cathode plate includes the cathode material, and thus has relatively high capacity and energy density.

In a fourth aspect, an embodiment of the present application provides a sodium-ion battery. The sodium-ion battery includes the cathode plate in the third aspect of the present application.

In this embodiment, the sodium-ion battery includes the cathode plate, and thus has relatively high capacity and energy density.

In a fifth aspect, an embodiment of the present application provides an electrical device. The electrical device includes the sodium-ion battery in the fourth aspect of the present application.

The electrical device of the present application includes the sodium-ion battery provided in the present application, and thus has at least the same advantages as the sodium-ion battery.

The above description only summarizes the technical solutions of the present application. In order to more clearly understand the technical means of the present application for implementation according to the contents of the specification, as well as to make the above and other objectives, technical features, and advantages of the present application clearer and more understandable, specific embodiments of the present disclosure are described below.

## BRIEF DESCRIPTION OF THE DRAWINGS

In order to illustrate the technical solutions of the present application more clearly, the drawings used in the embodiments will be described briefly below. Apparently, the following described drawings are merely for the embodiments of the present application, and other drawings can be derived according to the described drawings by those of ordinary skill in the art without any creative effort.

FIG. 1 is a schematic flowchart of a preparation process for a cathode material provided in the present application.
FIG. 2 is a morphology photo of the cathode material prepared in Example 8 of the present application.
FIG. 3 is a morphology photo of the cathode material prepared in Example 13 of the present application.
FIG. 4 is a morphology photo of the cathode material prepared in Example 13 of the present application.
FIG. 5 is an initial charge-discharge curve of a button battery prepared using the cathode material of Example 6 of the

present application.

FIG. 6 is an initial charge-discharge curve of a button battery prepared using the cathode material of Comparative Example 3 of the present application.

## DETAILED DESCRIPTION

Embodiments of technical solutions of the present application will now be described in detail with reference to the accompanying drawings. The following embodiments are only for illustrating the technical solutions of the present application more clearly, therefore only used as examples, but they should not be construed as limiting the protection scope of the present application.

Unless otherwise defined, all technical and scientific terms used herein have the same meaning as commonly understood by those of ordinary skill in the art to which the present application pertains. The terms used in the present application herein are for the purpose of describing embodiments only and are not intended to limit the present application. The terms "include" and "have" and any variations thereof in the specification and claims as well as the above description of drawings of the present application are intended to cover non-exclusive inclusions.

In the description of the embodiments of the present application, the technical terms "first", "second", etc. are only used to distinguish different objects and cannot be understood as indicating or implying relative importance or implicitly indicating the quantity, particular order, or primary and secondary relationship of the indicated technical features. In the description of embodiments of the present application, the "plurality" means two or more than two, unless otherwise specifically defined.

When "embodiment" is mentioned herein, it means that a particular feature, structure, or characteristic described based on the embodiment can be included in at least one embodiment of the present application. When appeared in various places in the specification, the phrase does not necessarily indicate the same embodiment, nor be a separate or alternative embodiment mutually exclusive of other embodiments. It is explicitly and implicitly understood by those skilled in the art that the embodiment described herein can be combined with other embodiments.

In the description of the embodiments of the present application, the term "and/or" only describes the association relationship of associated objects, indicating that there can be three relationships. For example, A and/or B may indicate three conditions: A alone, both A and B, and B alone. In addition, the character "/" herein generally indicates that the relationship between the former and latter objects is an "or" relationship.

In the description of the embodiments of the present application, the term "plurality" refers to at least two (including two). Similarly, "a plurality of groups" refers to at least two groups (including two groups), and "a plurality of pieces" refers to at least two pieces (including two pieces).

In the description of the embodiments of the present application, the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" etc. indicate the orientations or positional relationships on the basis of the drawings. These terms are only for the convenience of describing the present application and simplifying the description, rather than indicating or implying that the related devices or elements must have the specific orientations, or be constructed or operated in the specific orientations, and therefore cannot be understood as limitations of the embodiments of the present application.

In the description of the embodiments of the present application, unless otherwise clearly specified and defined, the technical terms "installed", "connected", "coupled", "fixed" and the like should be understood broadly. For example, an element, when being referred to as being "installed", "connected", "coupled", or "fixed" to another element, unless otherwise specifically defined, can be fixedly connected, detachably connected, or integrated to the other element, can be mechanical connected or electrically connected to the other element, and can be directly connected to the other element, or connected to the other element via an intermediate medium, or can be internal communication between two elements or interaction between two elements. For those skilled in the art, the specific meanings of the above terms in the embodiments of the present application can be understood according to specific circumstances.

At present, the prepared NVPF materials usually have three voltage platforms in their discharge curves relative to $Na^+/Na$, approximately being 4.1 V, 3.6 V, and 3.3 V to 3.4V. However, in theory, the NVPF materials should have only two platforms (approximately 4.1 V and 3.6 V relative to $Na^+/Na$). The existence of the low-voltage platform of 3.3V to 3.4V reduces the average discharge voltage and the discharge specific capacity of the cathode material and the sodium-ion battery using the cathode material, thereby leading to a decrease in energy density of the battery.

Based on the above phenomenon, the inventors discovered through research that the reason for the presence of the low-voltage platform of 3.3V to 3.4V in the currently prepared NVPF materials is that: the NVPF materials are usually prepared by using a solid-phase method, which is easy to cause a lot of F loss during the preparation, leading to the presence of impurity phases such as sodium vanadium phosphate ($Na_3V_2(PO_4)_3$) in a finished product, thereby reducing the purity or content of $Na_3V_2(PO_4)_2F_3$ in the material, thus forming the low voltage platform of 3.3V to 3.4V, so that the capacity of the product is relatively low and the energy density of the sodium-ion battery is not high.

In order to solve the technical problem of poor capacity and poor electronic conductivity of current NVPF materials, the present application provides a cathode material, a method for preparing the same, a cathode plate, a sodium-ion battery, and an electrical device. By improving the current NVPF materials and the method for preparing the same, the technical effect of improving the electronic conductivity and capacity of the NVPF materials can be achieved, so that the capacity and energy density of the cathode plate, secondary battery and electrical device can also be improved.

In a first aspect, the present application provides a cathode material. The cathode material includes a core and a carbon-containing coating layer coated on at least part of a surface of the core, and the core comprises sodium vanadium fluorophosphate ($Na_3V_2(PO_4)_2F_3$). A button battery is prepared using the cathode material and is subjected to an Nth charge-discharge test. In a discharge curve of the Nth charge-discharge test, a discharge specific capacity is C0, and a discharge specific capacity of a discharge platform corresponding to a voltage of 3.3 V to 3.4 V is C1, C1/C0<6.7%, where N is an integer equal to or greater than 1. The Nth charge-discharge test is performed at 20°C to 30°C by charging the button battery at a constant current of 0.2C rate to 4.3 V and then discharging the button battery at a constant current of 0.2C rate to 2 V.

In some embodiments, the button battery is prepared as follows. The cathode material provided in the present application, a conducting agent, and a binder are mixed in a certain mass ratio, and an appropriate amount of solvent is added to form a uniform electrode slurry. Then, the electrode slurry is evenly coated on an aluminum foil, dried under vacuum, cut into circular electrode plates with a certain diameter, and then transferred to a glove box for later use. A button battery is assembled by using sodium metal as a counter electrode, glass fiber as a diaphragm, and added electrolyte solution in the glove box filled with argon gas.

In some embodiments, the conducting agent includes one or more of carbon black, acetylene black, Ketjen black, and carbon nanotubes.

In some embodiments, the binder includes polyvinylidene fluoride (PVDF).

In some embodiments, in the electrode slurry, a mass ratio of the cathode material, the conducting agent, and the binder is (80:10:10) to (90:5:5).

In some embodiments, the solvent in the electrode slurry includes at least one of N-methylpyrrolidone (NMP) and water.

In some embodiments, the diameter of the circular electrode plate is 15 mm to 20 mm.

In some embodiments, the electrolyte solution includes an electrolyte, an organic solvent, and optionally an additive. The electrolyte includes at least one of sodium perchlorate ($NaClO_4$) and sodium hexafluorophosphate ($NaPF_6$). The organic solvent includes one or more of propylene carbonate, ethylene carbonate, and dimethyl carbonate. The additive includes fluoroethylene carbonate.

In some embodiments, a concentration of the electrolyte in the electrolyte solution is 1 mol/L to 1.5 mol/L. As an example, the button battery of the present application is prepared as follows: The cathode material provided in the present application, the conductive carbon black, and polyvinylidene fluoride (PVDF) are mixed in a mass ratio of 85:8:7, and an appropriate amount of N-methylpyrrolidone (NMP) is added to form a uniform electrode slurry. The electrode slurry is uniformly coated on an aluminum foil, dried under vacuum, then cut into circular electrode plates with a diameter of 15 mm, which are transferred to a glove box for later use. Next, a CR2032 button battery is assembled by using sodium metal as a counter electrode, a separator made of glass fibers and an electrolyte containing 1 mol/L of sodium perchlorate as the solute, and propylene carbonate, ethylene carbonate and fluoroethylene carbonate in a volume ratio of 1:1:0.05 as the solvent. The entire assembly process is carried out in the glove box filled with argon gas.

It should be noted that the aforementioned discharge curve is usually defined by taking specific capacity in mAh/g as the horizontal axis and voltage in V as the vertical axis. In the discharge curve, in the interval of 3.3 V to 3.4 V of the vertical axis voltage, there is a discharge platform that is approximately parallel to the horizontal axis. Assuming that the two endpoints of the discharge platform correspond to specific capacities C1' and C2' respectively, C1=|C1'-C2'|, i.e., an absolute value of the difference between C1' and C2'. C0 is a value of intersection between the end of the discharge curve and the horizontal axis, representing a specific capacity corresponding to the voltage of 0.

In some embodiments, N can be an integer selected from 1, 2, 3, 4, 5, 6, 7, 8, 9, 10, 11, 12, 13, 14, 15, 16, 17, 18, 19, 20, 30, 40, 50, 60, 70, 80, 90, 100, 200, 300, 400, 500, 600, 700, 800, 900, 1000, etc.

In some embodiments, C1/C0 can be 0, 0.1%, 0.5%, 1%, 1.5%, 2%, 2.5%, 3%, 3.5%, 4%, 4.5%, 5%, 5.5%, 6%, 6.5%, 6.7% or within a range defined by any two of the above values.

The cathode material provided in the present application contains $Na_3V_2(PO_4)_2F_3$ and optionally $Na_3V_2(PO_4)_3$. After a button battery is prepared using the cathode material, when the cathode material contains $Na_3V_2(PO_4)_3$, in the Nth discharge curve, there is a discharge platform in the voltage range from 3.3 V to 3.4 V, which corresponds to the discharge process of $Na_3V_2(PO_4)_3$. A ratio of the discharge specific capacity corresponding to this discharge platform to the Nth discharge specific capacity is C1/C0, which can reflect the mass proportion of $Na_3V_2(PO_4)_3$ impurity phase in the cathode material. The lower the C1/C0, the lower the mass proportion of $Na_3V_2(PO_4)_3$ impurity phase in the cathode material.

In the present application, C1/C0 is controlled to be less than 6.7%, indicating relatively high purity of $Na_3V_2(PO_4)_2F_3$ in the core of the cathode material and relatively low mass proportion of impurity phases such as $Na_3V_2(PO_4)_3$,

so that the capacity of the cathode material and the energy density of the sodium-ion battery are effectively improved. Meanwhile, the carbon-containing coating layer in the cathode material can effectively improve the electronic conductivity of NVPF, thereby further improving the capacity of the cathode material.

In some embodiments, $C1/C0 \leq 3.5\%$. For example, C1/C0 can be 0, 0.1%, 0.3%, 0.7%, 0.9%, 1.1%, 1.3%, 1.7%, 2.1%, 2.3%, 2.7%, 3.1%, 3.3%, 3.5% or within a range defined by any two of the above values.

In the technical solution of the embodiment of the present application, C1/C0 is controlled within the above range, which can control the mass proportion of $Na_3V_2(PO_4)_3$ impurity phase in the cathode material to be relatively low, and accordingly ensure relatively high mass proportion of $Na_3V_2(PO_4)_2F_3$ in the cathode material. That is, the NVPF phase in the cathode material has relatively high purity, which is conducive to further effectively improving the capacity of the cathode material and the energy density of the sodium-ion battery.

In some embodiments, the coverage rate of the carbon-containing coating layer on the surface of the core is 89% to 100%, preferably 95% to 100%, which is conducive to improving the capacity and corrosion resistance of the cathode material, so that the cathode material has good electronic conductivity. For example, the coverage rate of the carbon-containing coating layer on the surface of the core in the cathode material can be 89%, 90%, 91%, 92%, 93%, 94%, 95%, 96%, 97%, 98%, 99%, 100% or within a range defined by any two of the above values.

It can be understood that the "coverage rate" in the present application refers to a ratio of the area of the core surface covered by the carbon-containing coating layer to the core surface area.

In some embodiments, the mass fraction of carbon in the cathode material is 1.25% to 6%, preferably 1.5% to 3.5%. For example, the mass fraction of carbon in the cathode material can be 1.25%, 1.5%, 1.7%, 1.9%, 2.1%, 2.3%, 2.5%, 2.7%, 2.9%, 3.1%, 3.3%, 3.5%, 3.7%, 4%, 4.3%, 4.5%, 4.7%, 5%, 5.3%, 5.5%, 5.7%, 6% or within a range defined by any two of the above values.

It can be understood that the mass fraction of carbon in the cathode material refers to the mass percentage of carbon in the cathode material.

In the technical solution of the embodiment of the present application, the mass fraction of carbon in the cathode material is within the above range, which is conducive to taking into account both the compaction density and the electronic conductivity. If the mass fraction of carbon in the cathode material is relatively high, it is easy to form an excessive amount of loose porous carbon layer on the surface of the cathode material, resulting in a decrease in the compaction density. If the mass fraction of carbon in the cathode material is relatively low, the electronic conductivity is poor and the material capacity is low.

In some embodiments, the porosity of the cathode material is 10% to 69%, preferably 15% to 30%. For example, the porosity can be 10%, 15%, 17%, 19%, 21%, 23%, 25%, 27%, 30%, 35%, 40%, 45%, 50%, 55%, 60%, 65%, 69% or within a range defined by any two of the above values. The porosity is within the above range, which is conducive to ensuring the intercalation and deintercalation of sodium ions and also ensuring relatively high density of the carbon-containing coating layer, thereby facilitating to improve the compaction density of the cathode material.

In some embodiments, the compaction density of the cathode material is 1.4 $g/cm^3$ to 2 $g/cm^3$, preferably 1.53 $g/cm^3$ to 1.99 $g/cm^3$. For example, the compaction density can be 1.4 $g/cm^3$, 1.5 $g/cm^3$, 1.6 $g/cm^3$, 1.7 $g/cm^3$, 1.8 $g/cm^3$, 1.9 $g/cm^3$, 2 $g/cm^3$ or within a range defined by any two of the above values.

It should be noted that the compaction density of the cathode material refers to a compaction density of the cathode material under a pressure of 30 kN.

In the technical solution of the embodiment of the present application, the cathode material has relatively high compaction density, so that the sodium-ion battery can have relatively high energy density.

In a second aspect, the present application provides a method for preparing a cathode material, which can be used to prepare the cathode material in the first aspect of the present application. The method can include the following steps S1 to S3:

S1, providing a mixed slurry, wherein the mixed slurry includes a sodium source, a fluorine source, a vanadium source, a phosphorus source and a carbon source;
S2, drying the mixed slurry to obtain a precursor; and
S3, calcining the precursor to obtain the cathode material;
wherein the cathode material includes a core and a carbon-containing coating layer coated on at least part of a surface of the core, and the core includes sodium vanadium fluorophosphate ($Na_3V_2(PO_4)_2F_3$); a button battery is prepared using the cathode material and is subjected to an Nth charge-discharge test; in the Nth discharge curve, the discharge specific capacity is C0, and the discharge specific capacity of the discharge platform corresponding to the voltage of 3.3 V to 3.4 V is C1, $C1/C0<6.7\%$, where N is an integer equal to or greater than 1; and the Nth charge-discharge test is performed at 20°C to 30°C by charging the button battery at a constant current of 0.2C rate to 4.3 V and then discharging the button battery at a constant current of 0.2C rate to 2 V.

By using the preparation method provided in the present application, the core of the prepared cathode material

has relatively high purity of $Na_3V_2(PO_4)_2F_3$ and relatively low mass proportion of impurity phases such as $Na_3V_2(PO_4)_3$, so that the capacity of the cathode material and the energy density of the sodium-ion battery are effectively improved. Meanwhile, the carbon-containing coating layer in the cathode material prepared with the above method can effectively improve the electronic conductivity of the cathode material, thereby further improving the capacity of the cathode material.

In some embodiments, the carbon source includes at least one of citric acid, polyvinyl alcohol, glucose, sucrose, and oxalic acid, and optionally includes citric acid and/or polyvinyl alcohol (PEG).

In the technical solution of the embodiment of the present application, when the carbon source includes citric acid, the citric acid can be used as a reducing agent for the vanadium source in the mixed slurry, to reduce the valence of vanadium and complex with $V^{4+}$ and/or $V^{5+}$ to increase the solubility of vanadium in the mixed slurry, thereby achieving ion-level mixing of multiple elements. As such, the elements in the precursor obtained after drying can be distributed more uniform, which facilitates the migration and fusion of ions during calcination, thereby being conducive to improving the purity of the $Na_3V_2(PO_4)_2F_3$ phase in the product.

In the technical solution of the embodiment of the present application, when the carbon source includes polyvinyl alcohol, the carbon-containing coating layer formed from sintering the polyvinyl alcohol is denser, which is conducive to increasing the compaction density of the cathode material, thereby facilitating to improve the energy density of the sodium-ion battery.

In some embodiments, the carbon source comprises citric acid and polyvinyl alcohol.

In the technical solution of the embodiment of the present application, when the carbon source includes citric acid and polyvinyl alcohol, the combination of citric acid and polyvinyl alcohol can produce a mutually promoting effect, thereby further improving the compaction density, which is conducive to improving the energy density of the sodium-ion battery with the cathode material.

In some embodiments, when the carbon source is citric acid and polyvinyl alcohol, the mass ratio of citric acid to polyvinyl alcohol is 2:1 to 1:4, preferably 2:1 to 1:3. For example, the mass ratio of citric acid to polyvinyl alcohol can be 2:1, 1:1, 1:2, 1:3, 1:4 or within a range defined by any two of the above values, which is conducive to further improving the compaction density of the cathode material.

In some embodiments, the polyvinyl alcohol includes at least one of polyvinyl alcohol 2000, polyvinyl alcohol 3000, polyvinyl alcohol 4000, and polyvinyl alcohol 6000.

It should be noted that the "polyvinyl alcohol 2000" in the present application refers to polyvinyl alcohol having a weight average molecular weight of 2000; other polyvinyl alcohols are similar, referring to polyvinyl alcohols having weight average molecular weights of 3000, 4000 or 6000 respectively.

In some embodiments, the sodium source includes at least one of sodium fluoride, sodium phosphate, sodium bicarbonate, and sodium nitrate, optionally includes sodium fluoride.

In some embodiments, the fluoride source includes at least one of sodium fluoride, ammonium fluoride, potassium fluoride, and lithium fluoride, optionally includes sodium fluoride.

In the technical solution of the embodiment of the present application, when sodium fluoride is used as the sodium source and/or the fluorine source, fluorine can be provided simultaneously with sodium, which is conducive to reducing the input and waste of raw materials compared with the method of providing sodium and fluorine separately.

In some embodiments, the vanadium source includes vanadium pentoxide and/or ammonium metavanadate.

In some embodiments, the phosphorus source includes at least one of ammonium dihydrogen phosphate, sodium phosphate, ammonium dihydrogen phosphate, diammonium hydrogen phosphate, and triammonium phosphate.

In some embodiments, the mixed slurry is prepared by a method including the following steps:

step S10, taking the sodium source, the fluorine source, the vanadium source, and the phosphorus source according to a stoichiometric ratio of $Na_3V_2(PO_4)_2F_3$, and mixing with a solvent and the carbon source to form a first slurry;
step S20, adjusting the first slurry to have a pH value of 6 to 7 by using a pH regulator, and then grinding the first slurry to obtain the mixed slurry.

In the technical solution of the embodiment of the present application, the mixed slurry is ground to reduce the particle size of the mixed slurry and increase the solubility of various raw materials, which facilitates the ionic mixing of multiple elements and the uniform distribution of elements in the resulting precursor, and promotes the migration and fusion of ions during calcination, thereby being conducive to improving the purity of the $Na_3V_2(PO_4)_2F_3$ phase in the product.

In some embodiments, the drying is spray drying.

The inventors found in the research process that the mixed slurry contains a fluorine source, and $F^-$ in the fluorine source will partially hydrolyze to generate HF, which is easy to corrode the spray drying equipment. More importantly, HF will partially volatilize in the spray drying process, which leads to F loss and makes it easy to generate more impurity phases such as sodium vanadium phosphate in the finished product, thereby reducing the purity or content of $Na_3V_2(PO_4)_2F_3$, forming a 3.3 V low-voltage platform and resulting in relatively low product capacity.

According to the above preparation method provided in the present application, by adjusting the pH value of the mixed slurry to be 6 to 7, the hydrolysis of $F^-$ in the mixed slurry can be effectively inhibited, thereby inhibiting the generation of HF, effectively reducing the loss of F, and reducing the generation of impurity phases such as sodium vanadium phosphate in the finished product, so that the purity or content of $Na_3V_2(PO_4)_2F_3$ is effectively improved, thereby improving the capacity of the prepared cathode material.

It can be understood that the "purity of $Na_3V_2(PO_4)_2F_3$ (phase)" in the present application refers to the mass percentage of $Na_3V_2(PO_4)_2F_3$ in the cathode material.

In some embodiments, the pH value of the mixed slurry can be 6, 6.1, 6.2, 6.3, 6.4, 6.5, 6.6, 6.7, 6.8, 6.9, 7 or within a range defined by any two of the above values.

In some embodiments, the pH regulator includes at least one of aqueous ammonia, sodium hydroxide, sodium carbonate, sodium bicarbonate, and ammonium bicarbonate, optionally includes aqueous ammonia.

In the technical solution of the embodiment of the present application, when aqueous ammonia is used as the pH regulator, the aqueous ammonia is easily volatilized by generating ammonia gas during the subsequent calcination, so that other impurity elements will not be introduced, and the purity of $Na_3V_2(PO_4)_2F_3$ in the prepared cathode material can be improved.

In some embodiments, the type of the solvent is not limited; and water for example, at least one of pure water, deionized water, or distilled water commonly used in the art can be used as the solvent.

In some embodiments, the mixed slurry further includes a fluorine supplement.

In the process of calcining the precursor in the above step S3, there is usually a partial loss of F. When the mixed slurry contains the fluorine supplement, the fluorine supplement can replenish the loss part of F, thereby effectively reducing the formation of impurity phases such as sodium vanadium phosphate in the finished product, effectively improving the purity or content of $Na_3V_2(PO_4)_2F_3$, and thus improving the capacity of the prepared cathode material.

In some embodiments, the fluorine supplement includes ammonium fluoride and/or sodium fluoride, and further includes ammonium fluoride.

In the technical solution of the embodiment of the present application, when ammonium fluoride is used as the fluorine supplement, on the one hand, $F^-$ can be replenished; on the other hand, ammonium ions can be volatilized in the form of ammonia gas in the subsequent calcination process, so that other impurity elements will not be introduced, and the purity of $Na_3V_2(PO_4)_2F_3$ in the prepared cathode material can be improved.

In some embodiments, the molar amount of the fluorine supplement is 1% to 5%, preferably 3% to 5% of the molar amount of the fluorine source. For example, the molar amount of the fluorine supplement can be 1%, 1.5%, 2%, 2.5%, 3%, 3.1%, 3%, 3.3%, 3.5%, 3.7%, 4%, 4.1%, 4.3%, 4.5%, 4.7%, 5% of the molar amount of the fluorine source, or within a range defined by any two of the above values. As such, $F^-$ can be effectively replenished, and it can also possibly avoid the adverse effects of excessive impurity phases in the finished product and poor electrochemical performance of the finished product due to the relatively large molar amount of the fluorine supplement.

In some embodiments, the calcination temperature is 550°C to 800°C, preferably 650°C to 800°C. For example, the calcination temperature can be 550°C, 600°C, 650°C, 660°C, 670°C, 680°C, 690°C, 700°C, 710°C, 720°C, 730°C, 740°C, 750°C, 800°C or within a range defined by any two of the above values.

In some embodiments, the time period of maintaining the calcination temperature is 3 h to 10 h, preferably 4 h to 9 h. For example, the time period of maintaining the calcination temperature can be 3 h, 4 h, 5 h, 6 h, 7 h, 8 h, 9 h, 10 h or within a range defined by any two of the above values.

It can be understood that the time period of maintaining the calcination temperature refers to the time of maintaining the temperature after raising a temperature to the calcination temperature.

In the technical solution of the embodiment of the present application, the calcination temperature or the time period of maintaining the calcination temperature is within the above respective ranges, which improves the density of the carbon-containing coating layer, and also improves the purity of $Na_3V_2(PO_4)_2F_3$ in the cathode material. If the calcination temperature is relatively low, or the time period of maintaining the calcination temperature is relatively short, it is easy to cause incomplete carbonization of the carbon source forming the carbon-containing coating layer, with low degree of graphitization, so that the prepared cathode material exhibits poor electronic conductivity and low capacity. In addition, when the calcination temperature is relatively low, the formed carbon-containing coating layer is relatively loose, leading to relatively low compaction density of the cathode material. If the calcination temperature is relatively high, or the time period of maintaining the calcination temperature is relatively long, it is easy to cause more F loss, relatively low purity of the $Na_3V_2(PO_4)_2F_3$ phase in the cathode material, and decreased capacity of the cathode material.

In some embodiments, during raising a temperature to the calcination temperature, the corresponding temperature raising process includes the following stages.

Stage 1, the temperature is raised from the room temperature to a stage of 120°C to 150°C, and maintained at the stage of 120°C to 150°C for 2 h to 4 h to consume the precursor as much as possible, so that the generation of an excessively high moisture content in the higher temperature stage, which can consume more carbon source, is avoided.

Stage 2, the temperature is raised from the stage of 120°C to 150°C to a stage of 400°C to 550°C, and maintained

at the stage of 400°C to 550°C for 1 h to 3 h. This stage can promote the decomposition of organic matter in the precursor and the reduction of vanadium.

Stage 3, the temperature is raised from the stage of 400°C to 550°C to a stage of 550°C to 800°C, and maintained at the stage of 550°C to 800°C for 5 h to 9 h.

It should be noted that the room temperature in the present application refers to 25°C to 35°C.

In some embodiments, in stage 1, the temperature can be maintained at 120°C, 130°C, 140°C, or 150°C or within a range defined by any two of the above values, and the time period of maintaining the temperature can be 2 h, 3 h, or 4 h, or within a range defined by any two of the above values.

In some embodiments, in stage 2, the temperature can be maintained at 400°C, 450°C, 500°C, or 550°C or within a range defined by any two of the above values, and the time period of maintaining the temperature can be 1 h, 2 h, or 3 h, or within a range defined by any two of the above values.

In some embodiments, in stage 3, the temperature can be maintained at 550°C, 600°C, 650°C, 700°C, 750°C, or 800°C, or within a range defined by any two of the above values, and the time period of maintaining the temperature can be 5 h, 6 h, 7 h, 8 h, or 9 h, or within a range defined by any two of the above values.

In some embodiments, the calcination process is performed in a protective atmosphere. Optionally, the protective atmosphere includes nitrogen gas and/or argon gas.

In a third aspect, the present application provides a cathode plate. The cathode plate includes the cathode material in the first aspect of the present application or the cathode material prepared by the preparation method in the second aspect of the present application.

The cathode plate contains the cathode material in the first aspect of the present application or the cathode material prepared by the preparation method in the second aspect of the present application, and thus has relatively high capacity and energy density.

In a fourth aspect, the present application provides a sodium-ion battery. The sodium-ion battery includes the cathode plate in the third aspect of the present application.

The sodium-ion battery includes the cathode plate in the third aspect of the present application, and thus has relatively high capacity and energy density.

In a fifth aspect, the present application provides an electrical device. The electrical device includes the sodium-ion battery in the fourth aspect of the present application.

The electrical device includes the sodium-ion battery in the fourth aspect of the present application, and thus has at least the same advantages as the sodium-ion battery.

In some embodiments, the electrical device can be, but is not limited to mobile phones, tablets, notebook computers, electric toys, electric tools, battery cars, electric cars, ships, spacecraft, etc. Among them, the electric toys may include a stationary electric toy or a mobile electric toy, such as a game console, an electric car toy, an electric ship toy, an electric airplane toy, etc.; and the spacecraft may include an airplane, a rocket, a space shuttle, a spaceship, etc.

Some specific embodiments are listed below. It should be noted that the embodiments described below are illustrative and are only used to explain the present application, and cannot be understood as limiting the present application. If specific techniques or conditions are not indicated in the embodiments, the processes are carried out in accordance with the techniques or conditions described in literature in the art or in accordance with product instructions. The reagents or instruments for which no manufacturers are noted are all common products that can be purchased from the market.

1. Preparation methods

Example 1

(1) Sodium fluoride (257.07 g), vanadium pentoxide (365.59 g) and ammonium dihydrogen phosphate (464.28 g) were dispersed in water according to the stoichiometric ratio of $Na_3V_2(PO_4)_2F_3$, and citric acid and polyvinyl alcohol in a mass ratio of 2:1 were added as carbon sources to form a first slurry, in which a weight average molecular weight of polyvinyl alcohol was 2000, and a total mass ratio of citric acid and polyvinyl alcohol was 2%. The total mass ratio is a ratio of the total mass of citric acid and polyvinyl alcohol to the total mass of sodium fluoride, vanadium pentoxide, ammonium dihydrogen phosphate, citric acid and polyvinyl alcohol. Then, aqueous ammonia was added to the first slurry to adjust the pH value to 6. Next, the first slurry was cyclically ground in a sand mill at a grinding speed of 1000 r/min for 3 h to obtain a mixed slurry.

(2) The mixed slurry was spray-dried to obtain a precursor.

(3) The precursor was transferred into a sintering furnace and calcined in an argon gas protective atmosphere. In the sintering furnace, the oxygen content was controlled to be less than or equal to 10 ppm, the moisture content in the

highest temperature-maintaining stage was less than or equal to 10 ppm, the CO content was less than or equal to 10 ppm, and the $H_2$ content was less than or equal to 10 ppm. The temperature of the sintering furnace was raised from room temperature to 140°C and maintained at 140°C for 3 h, raised from 140°C to 500°C and maintained at 500°C for 2 h, and then raised from 500°C to 705°C and maintained at 705°C for 6.5 h to obtain the cathode material.

Example 2

The preparation process was similar to that of Example 1, except that in step (1), the pH value was adjusted to 7.

Examples 3 to 7

The preparation processes were similar to that of Example 1, except that ammonium fluoride was added to the mixed solution in step (1) as a fluorine supplement, and the molar amounts of ammonium fluoride were 1%, 2%, 3%, 5% and 8% of the molar amount of sodium fluoride, respectively.

Examples 8 to 11

The preparation processes were similar to that of Example 1, except that in step (1), the mass ratios of citric acid to polyvinyl alcohol were 1:1, 1:2, 1:3 and 1:4, respectively.

Example 12

The preparation process was similar to that of Example 1, except that in step (1), polyvinyl alcohol was replaced with an equal amount of citric acid.

Example 13

The preparation process was similar to that of Example 1, except that in step (1), citric acid was replaced with an equal amount of polyvinyl alcohol.

Example 14

The preparation process was similar to that of Example 1, except that in step (1), polyvinyl alcohol and citric acid were respectively replaced with equal amounts of glucose.

Examples 15 to 21

The preparation processes were similar to that of Example 1, except that in step (1), the total mass ratio of citric acid and polyvinyl alcohol was adjusted such that the mass fractions of carbon in the prepared cathode materials were 1.25%, 1.5%, 2%, 2.3%, 3%, 5% and 6%, respectively, and correspondingly, the total masses of citric acid and polyvinyl alcohol were 152.17 g, 182.61 g, 243.48 g, 280 g, 365.22 g, 608.70 g and 730.43 g, respectively.

Examples 22 to 27

The preparation processes were similar to that of Example 1, except that in step (3), the calcination temperatures were 500°C, 600°C, 650°C, 750°C, 700°C and 800°C, respectively.

Examples 28 to 35

The preparation processes were similar to that of Example 1, except that in step (3), the time periods of maintaining the calcination temperature were 3 h, 4 h, 5 h, 6 h, 7 h, 8 h, 9 h and 10 h, respectively.

Examples 36 to 37

The preparation processes were similar to that of Example 1, except that in step (1), the weight average molecular weights of the polyvinyl alcohol were 6000 and 4000, respectively.

Comparative Examples 1 and 2

The preparation processes were similar to that of Example 1, except that in step (1), the pH values were adjusted to 4 and 5, respectively.

Comparative Example 3

The preparation process was similar to that of Example 1, except that in step (1), the pH value was adjusted to 8.

2. Test methods

2.1 The mass fraction of carbon in the cathode material can be tested by using the high-frequency combustion infrared absorption method according to Methods for chemical analysis of lithium iron phosphate (YS/T 1028.4-2015), Part 4: Determination of carbon content.
2.2 The compaction density of the cathode material was tested by using a compaction density tester with a test pressure of 3 tons (T) and a pressing time of 30 seconds.
2.3 The porosity of the cathode material was tested according to Porosity determination method of lightweight porous materials (TCSTM 00553-2022).
2.4 The coverage rate of the carbon-containing coating layer was measured by using a transmission electron microscope (TEM) and an energy dispersive X-ray spectrometer (EDX).

2.5 Tests of properties of sodium-ion batteries

(1) Preparation of button batteries

Preparation of cathode plate: Each of the cathode materials prepared in the examples or comparative examples, sodium alginate as the binder and acetylene black as the conducting agent in a mass ratio of 8:1:1 were dissolved in N-methylpyrrolidone (NMP) solvent to obtain a cathode slurry. The cathode slurry was coated on both sides of an aluminum foil current collector, dried, cold-pressed and cut to obtain the cathode plate.
Battery assembly: CR2032 button battery was assembled by using sodium metal as a counter electrode, a separator made of glass fibers, an electrolyte containing 1 mol/L of sodium perchlorate as the solute, and propylene carbonate, ethylene carbonate and fluoroethylene carbonate in a volume ratio of 1:1:0.05 as the solvent. The entire assembly process was carried out in a glove box filled with argon gas. The button battery was left to stand for 6 h and then the electrochemical performance thereof was tested.

(2) Tests of initial charge specific capacity and initial discharge specific capacity

By using a blue battery tester (CT2001A), the button battery was charged to 4.3 V at a constant current rate of 0.2 C, and then discharged to 2 V at a constant current rate of 0.2 C, at 20°C to 30°C and a normal pressure, with the test environment humidity less than 15%. The battery was cycled for 500 cycles according to the above charge-discharge mode, and the discharge specific capacity and capacity retention rate at 500th cycle were measured.

Initial cycle coulombic efficiency = initial discharge specific capacity/initial charge specific capacity×100%

Table 1

| | C1/CO(%) | Mass fraction of carbon | Coverage rate of carbon-containing coating layer | Porosity of cathode material | Compaction density (g/cm$^3$) |
|---|---|---|---|---|---|
| Example 1 | 0.5 | 2.30% | 99% | 18% | 1.743 |
| Example 2 | 3.85 | 2.30% | 98% | 23% | 1.822 |
| Example 3 | 0.44 | 2.30% | 96% | 26% | 1.812 |
| Example 4 | 0.41 | 2.30% | 99% | 24% | 1.799 |

(continued)

| | C1/CO(%) | Mass fraction of carbon | Coverage rate of carbon-containing coating layer | Porosity of cathode material | Compaction density (g/cm$^3$) |
|---|---|---|---|---|---|
| Example 5 | 0.35 | 2.30% | 98% | 17% | 1.842 |
| Example 6 | 0.65 | 2.30% | 100% | 19% | 1.835 |
| Example 7 | 5.4 | 2.30% | 96% | 28% | 1.767 |
| Example 8 | 3.5 | 2.30% | 96% | 27% | 1.831 |
| Example 9 | 0.51 | 2.30% | 96% | 19% | 1.857 |
| Example 10 | 0.5 | 2.30% | 97% | 24% | 1.872 |
| Example 11 | 0.51 | 2.30% | 99% | 24% | 1.906 |
| Example 12 | 0.5 | 2.30% | 100% | 23% | 1.678 |
| Example 13 | 0.52 | 2.30% | 100% | 16% | 1.988 |
| Example 14 | 0.53 | 2.30% | 99% | 24% | 1.627 |
| Example 15 | 0.53 | 1.25% | 89% | 10% | 1.9 |
| Example 16 | 0.51 | 1.50% | 95% | 15% | 1.866 |
| Example 17 | 0.5 | 2% | 96.5% | 15.5% | 1.831 |
| Example 18 | 0.5 | 2.3% | 96.4% | 15.6% | 1.73 |
| Example 19 | 0.5 | 3% | 99.5% | 30% | 1.677 |
| Example 20 | 0.51 | 5% | 99.7% | 45% | 1.563 |
| Example 21 | 0.53 | 6% | 100% | 69% | 1.531 |
| Example 22 | 0.52 | 2.30% | 96% | 19% | 1.545 |
| Example 23 | 0.51 | 2.30% | 97% | 18% | 1.661 |
| Example 24 | 0.51 | 2.30% | 98% | 18% | 1.72 |
| Example 25 | 0.5 | 2.30% | 97% | 28% | 1.831 |
| Example 26 | 0.5 | 2.30% | 96% | 19% | 1.85 |
| Example 27 | 0.53 | 2.30% | 97% | 19% | 1.887 |
| Example 28 | 6 | 2.30% | 99% | 25% | 1.455 |
| Example 29 | 5.9 | 2.30% | 99% | 27% | 1.67 |
| Example 30 | 5.8 | 2.30% | 97% | 20% | 1.78 |
| Example 31 | 0.51 | 2.30% | 98% | 16% | 1.831 |
| Example 32 | 1 | 2.30% | 96% | 16% | 1.842 |
| Example 33 | 5.2 | 2.30% | 98% | 24% | 1.841 |
| Example 34 | 5.4 | 2.30% | 99% | 22% | 1.855 |
| Example 35 | 6.1 | 2.30% | 97% | 16% | 1.852 |
| Example 36 | 0.51 | 2.30% | 97% | 28% | 1.724 |
| Example 37 | 0.52 | 2.30% | 98% | 17% | 1.732 |
| Comparative Example 1 | 6.9 | 2.30% | 98% | 22% | 1.764 |
| Comparative Example 2 | 6.7 | 2.30% | 98% | 17% | 1.783 |
| Comparative Example 3 | 8.1 | 2.30% | 97% | 26% | 1.734 |

Table 2

| | Initial charge specific capacity | Initial discharge specific capacity | Initial cycle coulombic efficiency (%) | Discharge specific capacity at 500th cycle | Capacity retention rate at 500th cycle (%) |
|---|---|---|---|---|---|
| | (mAh/g) | (mAh/g) | | (mAh/g) | |
| Example 1 | 128.0 | 124.1 | 96.95 | 109.21 | 88.00% |
| Example 2 | 126.2 | 121.4 | 96.20 | 103.80 | 85.50% |
| Example 3 | 127.5 | 123.5 | 96.86 | 108.68 | 88.00% |
| Example 4 | 127.9 | 123.7 | 96.72 | 109.47 | 88.50% |
| Example 5 | 128.8 | 125.3 | 97.28 | 111.52 | 89.00% |
| Example 6 | 128.0 | 124.6 | 97.34 | 108.40 | 87.00% |
| Example 7 | 123.1 | 116.2 | 94.39 | 98.77 | 85.00% |
| Example 8 | 127.3 | 123.4 | 96.94 | 107.36 | 87.00% |
| Example 9 | 124.8 | 120.4 | 96.47 | 102.34 | 85.00% |
| Example 10 | 123.8 | 117.4 | 94.83 | 99.20 | 84.50% |
| Example 11 | 123.2 | 117 | 94.97 | 98.87 | 84.50% |
| Example 12 | 128.8 | 124.6 | 96.74 | 107.16 | 86.00% |
| Example 13 | 123.6 | 116.2 | 94.01 | 98.77 | 85.00% |
| Example 14 | 121.3 | 114.2 | 94.15 | 95.93 | 84.00% |
| Example 15 | 118.9 | 109.3 | 91.93 | 89.63 | 82.00% |
| Example 16 | 117.5 | 109.3 | 93.02 | 90.17 | 82.50% |
| Example 17 | 127.3 | 123.4 | 96.94 | 108.59 | 88.00% |
| Example 18 | 127.5 | 123.8 | 97.10 | 107.71 | 87.00% |
| Example 19 | 127.1 | 122.9 | 96.70 | 104.47 | 85.00% |
| Example 20 | 124.8 | 120.4 | 96.47 | 102.34 | 85.00% |
| Example 21 | 123.8 | 117.4 | 94.83 | 99.79 | 85.00% |
| Example 22 | 116.1 | 103.6 | 89.23 | 89.10 | 86.00% |
| Example 23 | 117.3 | 110.4 | 94.12 | 89.42 | 81.00% |
| Example 24 | 122.8 | 118.6 | 96.58 | 99.62 | 84.00% |
| Example 25 | 127.3 | 123.4 | 96.94 | 108.59 | 88.00% |
| Example 26 | 123.7 | 118.4 | 95.72 | 100.64 | 85.00% |
| Example 27 | 118.9 | 113 | 95.04 | 92.10 | 81.50% |
| Example 28 | 114.2 | 89.7 | 78.55 | 72.66 | 81.00% |
| Example 29 | 116.7 | 110.6 | 94.77 | 90.69 | 82.00% |
| Example 30 | 123 | 117.1 | 95.20 | 99.54 | 85.00% |
| Example 31 | 127.3 | 123.4 | 96.94 | 108.59 | 88.00% |
| Example 32 | 126.6 | 121.8 | 96.21 | 105.97 | 87.00% |
| Example 33 | 124.5 | 119.9 | 96.31 | 101.92 | 85.00% |
| Example 34 | 120.9 | 114.2 | 94.46 | 95.93 | 84.00% |
| Example 35 | 123.5 | 108.2 | 87.61 | 90.89 | 84.00% |
| Example 36 | 125.5 | 120.7 | 96.18 | 102.60 | 85.00% |

(continued)

| | Initial charge specific capacity | Initial discharge specific capacity | Initial cycle coulombic efficiency (%) | Discharge specific capacity at 500th cycle | Capacity retention rate at 500th cycle (%) |
|---|---|---|---|---|---|
| | (mAh/g) | (mAh/g) | | (mAh/g) | |
| Example 37 | 126.7 | 121.1 | 95.58 | 105.36 | 87.00% |
| Comparative Example 1 | 112.5 | 87.1 | 77.42 | 69.24 | 79.50% |
| Comparative Example 2 | 111.6 | 86.28 | 77.31 | 68.16 | 79.00% |
| Comparative Example 3 | 109.5 | 85.3 | 77.90 | 66.53 | 78.00% |

3. Analysis of test results of the examples and comparative examples

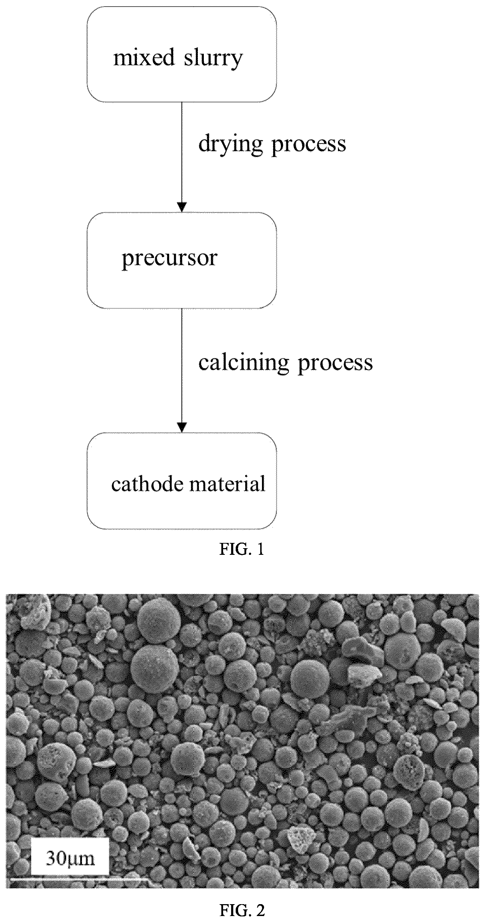

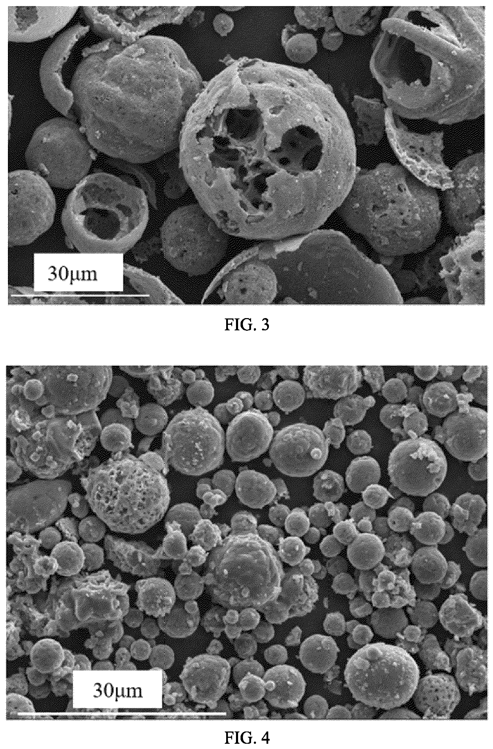

FIG. 2 to FIG. 4 show that the cathode material prepared in the present application has a core-shell morphology and relatively uniform particle size distribution.

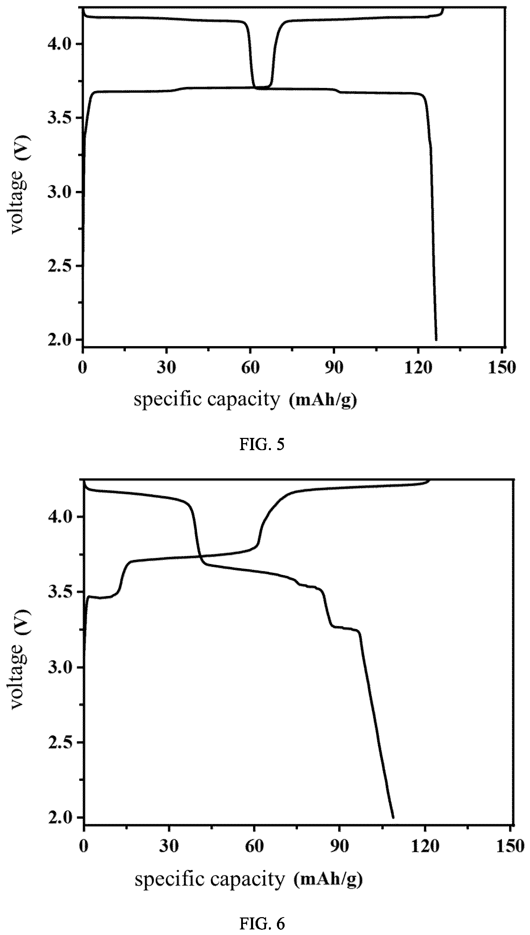

In the discharge curve of FIG. 5, there is almost no voltage platform in the voltage range of 3.3 V to 3.4 V, indicating an extremely low content of the $Na_3V_2(PO_4)_3$ impurity phase in the cathode material. In the discharge curve of FIG. 6, the discharge specific capacity of the discharge platform corresponding to 3.3 V to 3.4 V is 98 mAh/g minus 89 mAh/g, and the initial discharge specific capacity is 111 mAh/g. Correspondingly, in Comparative Example 3, C1/C0=8.1%, indicating a relatively high content of $Na_3V_2(PO_4)_3$ impurity phase.

It can be seen from Table 1 that in the cathode materials prepared in the examples, the mass fraction of carbon is ranged from 1.25% to 6%, the coverage rate of the carbon-containing coating layer is ranged from 89% to 100%, the porosity of the cathode material is ranged from 10% to 69%, the compaction density is ranged from 1.4 g/cm$^3$ to 2 g/cm$^3$, and C1/C0 is less than 6.7%, further C1/C0 is less than or equal to 6.1%. In contrast, the cathode materials prepared in Comparative Examples 1 to 3 have C1/C0 greater than or equal to 6.7%.

Furthermore, in each of the examples, aqueous ammonia was added to the first slurry and the pH value was adjusted to 6 to 7, so that the hydrolysis of $F^-$ in the slurry can be effectively inhibited, and the generation of HF can be inhibited, which effectively reduced the loss of F and the generation of impurity phases such as sodium vanadium phosphate in the finished product. Therefore, the mass proportion of the $Na_3V_2(PO_4)_3$ impurity phase in the cathode material is relatively low, the purity of the NVPF phase is relatively high, and finally the C1/C0 is less than 6.7%. Combined with the initial charge specific capacity, the initial discharge specific capacity, the discharge specific capacity at 500th cycle and the capacity retention rate at 500th cycle in Table 2, it can be seen that the cathode materials provided in the examples of the present application have a higher capacity and a higher capacity retention rate, possessing a higher energy density. In contrast, the pH values of Comparative Examples 1 to 3 were less than 6 or greater than 7, which makes it difficult to inhibit the generation of HF and the loss of F, and thus the mass proportion of the $Na_3V_2(PO_4)_3$ impurity phase in the cathode material is relatively high, the purity of the NVPF phase is low, and finally the C1/C0 is greater than or equal to 6.7%; when combined with the initial charge specific capacity, the initial discharge specific capacity, the discharge specific capacity at 500th cycle and the capacity retention rate at 500th cycle in Table 2, it can be seen that the capacity and capacity retention rate of the cathode materials in Comparative Examples 1 to 3 are low, and the energy density is also low.

Furthermore, in combination with the results of Example 1 and Example 3 to Example 7 in Table 1 and Table 2, it can be seen that, on the basis of Example 1, Examples 3 to 6 added an appropriate amount of ammonium fluoride as a fluorine supplement, which replenished the F loss, reduced the generation of impurity phases such as sodium vanadium phosphate in the finished product, and facilitated the improvement of the purity of $Na_3V_2(PO_4)_2F_3$, being manifested as C1/C0 values comparable to or smaller than that of Example 1, and having discharge specific capacities at 500th cycle comparable to or higher than that of Example 1. However, Example 7 added a relatively large molar amount of ammonium fluoride, which increased the amounts of impurities in the finished product and resulted in the discharge specific capacity at 500th cycle lower than those of Example 1 and Example 3 to Example 6.

In combination with the results of Example 1 and Example 12 in Table 1 and Table 2, it can be seen that compared with the single citric acid as the carbon source in Example 12, Example 1 added polyvinyl alcohol, leading to a denser carbon-containing coating layer and an improved compaction density. In combination with the results of Example 1 and Example 13 in Table 1 and Table 2, it can be seen that compared with the single polyvinyl alcohol as the carbon source in Example 13, Example 1 added sodium citrate, which improved the purity of the NVPF phase to a certain extent, exhibiting a lower C1/C0 and an increase in the discharge specific capacity at 500th cycle. In combination with the results of Example 1 and Example 14 in Table 1 and Table 2, it can be seen that compared with using glucose as the carbon source in Example 14, the combination of citric acid and polyvinyl alcohol was used in Example 1, which improves the compaction density.

In combination with the results of Example 1, Example 8 to Example 11 in Table 1 and Table 2, it can be seen that when the mass ratio of sodium citrate to polyvinyl alcohol is in the range of 2:1 to 1:3, the corresponding button battery exhibits a better discharge specific capacity at 500th cycle. In combination with the results of Example 1, Example 15 to Example 21 in Table 1 and Table 2, it can be seen that when the mass fraction of carbon in the cathode material is ranged from 1.5% to 3.5%, the corresponding button battery exhibits a better discharge specific capacity at 500th cycle. In combination with the results of Example 1, Example 22 to Example 27, and Example 28 to Example 35 in Table 1 and Table 2, it can be seen that the calcination temperature and the calcination time affect the purity of NVPF in the cathode material and the compaction density of the cathode material, thereby affecting the performance of the corresponding button battery. Specifically, when the calcination temperature is ranged from 650°C to 800°C and the calcination time is ranged from 5 h to 9 h, the corresponding button battery exhibits a relatively high discharge specific capacity at 500th cycle.

In summary, by controlling C1/C0<6.7%, the cathode material and the battery prepared with the cathode material can exhibit relatively excellent capacity and capacity retention rate.

It should be noted that the present application is not limited to the foregoing embodiments. The foregoing embodiments are merely examples, and embodiments having substantially the same configurations and effects as those of the technical conceptions within the scope of the present application are all included in the technical scope of the present application. In addition, various modifications that can be conceived by those skilled in the art may be made to the embodiments without departing from the spirit and scope of the present application, and other embodiments that are constructed by combining some of the components in the embodiments are also included in the scope of the present application.

## Claims

1. A cathode material, comprising a core and a carbon-containing coating layer coated on at least part of a surface of the core, and the core comprises sodium vanadium fluorophosphate; wherein a button battery is prepared using the cathode material and is subjected to an Nth charge-discharge test,

   in a discharge curve of the Nth charge-discharge test, a discharge specific capacity is C0, and a discharge specific capacity of a discharge platform corresponding to a voltage of 3.3 V to 3.4 V is C1, C1/C0<6.7%, where N is an integer equal to or greater than 1;
   the Nth charge-discharge test is performed at 20°C to 30°C by charging the button battery at a constant current of 0.2C rate to 4.3 V and then discharging the button battery at a constant current of 0.2C rate to 2 V.

2. The cathode material according to claim 1, wherein the cathode material satisfies at least one of the following conditions:

   (1)

   $$C1/C0 \leq 3.5\%;$$

   (2) a coverage rate of the carbon-containing coating layer on the surface of the core is 89% to 100%, preferably 95% to 100%;
   (3) a porosity of the cathode material is 10% to 69%, preferably 15% to 30%;
   (4) a mass fraction of carbon in the cathode material is 1.25% to 6%, preferably 1.5% to 3.5%;
   (5) a compaction density of the cathode material is 1.4 g/cm$^3$ to 2 g/cm$^3$, preferably 1.53 g/cm$^3$ to 1.99 g/cm$^3$.

3. A method for preparing a cathode material, comprising:

   providing a mixed slurry, the mixed slurry comprising a sodium source, a fluorine source, a vanadium source, a phosphorus source and a carbon source;
   drying the mixed slurry to obtain a precursor; and
   calcining the precursor to obtain the cathode material;
   wherein the cathode material comprises a core and a carbon-containing coating layer coated on at least part of a surface of the core, and the core comprises sodium vanadium fluorophosphate; a button battery is prepared using the cathode material and is subjected to an Nth charge-discharge test; in a discharge curve of the Nth charge-discharge test, a discharge specific capacity is C0, and a discharge specific capacity of a discharge platform corresponding to a voltage of 3.3 V to 3.4 V is C1, C1/C0<6.7%, where N is an integer equal to or greater than 1; and the Nth charge-discharge test is performed at 20°C to 30°C by charging the button battery at a constant

current of 0.2C rate to 4.3 V and then discharging same at a constant current of 0.2C rate to 2 V.

**4.** The method according to claim 3, wherein the carbon source comprises at least one of citric acid, polyvinyl alcohol, glucose, sucrose, and oxalic acid, optionally comprises citric acid and/or polyvinyl alcohol, and further optionally comprises citric acid and polyvinyl alcohol;

optionally, the carbon source is citric acid and polyvinyl alcohol, and a mass ratio of citric acid to polyvinyl alcohol is 2:1 to 1:4;
optionally, the polyvinyl alcohol comprises at least one of polyvinyl alcohol 2000, polyvinyl alcohol 3000, polyvinyl alcohol 4000, and polyvinyl alcohol 6000.

**5.** The method according to claim 3 or 4, wherein the sodium source comprises at least one of sodium fluoride, sodium phosphate, sodium bicarbonate and sodium nitrate, and optionally comprises sodium fluoride;

the fluorine source comprises at least one of sodium fluoride, ammonium fluoride, potassium fluoride and lithium fluoride, and optionally comprises sodium fluoride;
the vanadium source comprises vanadium pentoxide and/or ammonium metavanadate;
the phosphorus source comprises at least one of ammonium dihydrogen phosphate, sodium phosphate, ammonium dihydrogen phosphate, diammonium hydrogen phosphate, and triammonium phosphate.

**6.** The method according to claim 3 or 4, wherein the mixed slurry is prepared by a method comprising:

taking the sodium source, the fluorine source, the vanadium source, and the phosphorus source according to a stoichiometric ratio of sodium vanadium fluorophosphate, and mixing with a solvent and the carbon source to form a first slurry;
adjusting the first slurry to have a pH value of 6 to 7 by using a pH regulator, and then grinding the first slurry to obtain the mixed slurry;
optionally, the pH regulator comprises at least one of aqueous ammonia, sodium hydroxide, sodium carbonate, sodium bicarbonate, and ammonium bicarbonate, further optionally comprises aqueous ammonia.

**7.** The method according to claim 3 or 4, wherein the mixed slurry further comprises a fluorine supplement;

optionally, the fluorine supplement comprises ammonium fluoride and/or sodium fluoride, and further optionally comprises ammonium fluoride;
optionally, a molar amount of the fluorine supplement is 1% to 5% of a molar amount of the fluorine source.

**8.** The method according to claim 3 or 4, wherein a calcination temperature is 550°C to 800°C, preferably 650°C to 800°C; a time period of maintaining the calcination temperature is 3 h to 10 h, preferably 4 h to 9 h; and the calcining is performed under a protective atmosphere;
optionally, the protective atmosphere comprises nitrogen gas and/or argon gas.

**9.** A cathode plate, comprising the cathode material according to claim 1 or 2 or the cathode material prepared by the method according to any one of claims 3 to 8.

**10.** A sodium-ion battery, comprising the cathode plate according to claim 9.

mixed slurry
drying process
precursor
calcining process
cathode material

FIG. 1

30μm

FIG. 2

30μm

FIG. 3

30μm

FIG. 4

voltage (V)
4.0
3.5
3.0
2.5
2.0
0
30
60
90
120
150
specific capacity (mAh/g)

FIG. 5

voltage (V)
4.0
3.5
3.0
2.5
2.0
0
30
60
90
120
150
specific capacity (mAh/g)

FIG. 6

**INTERNATIONAL SEARCH REPORT**

International application No. **PCT/CN2024/127764**

**A. CLASSIFICATION OF SUBJECT MATTER**

H01M4/36(2006.01)i；H01M4/58(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, 中国期刊网全文数据库, China Journal Network Full-text Database (CJFD), ISI Web of Science: 湖北万润新能源科技股份有限公司, 彭堂平, 吕飞, 石智翔, 包覆率, 草酸, 充, 放电, 放电比容量, 氟, 氟磷酸钒钠, 聚乙烯醇, 孔隙率, 压实密度, 磷酸钒钠, 柠檬酸, 葡萄糖, 酸碱, 碳包覆, 碳包覆层, 碳包裹, 碳包裹层, 碳涂层, 碳源, 蔗糖, c0, c1, nvpf, ph, c1/c0, na3v2(pO4)2F3, 0.2c, sodium vanadium fluorophosphate, carbon, discharge, curve, capacity

**C. DOCUMENTS CONSIDERED TO BE RELEVANT**

| Category* | Citation of document, with indication, where appropriate, of the relevant passages | Relevant to claim No. |
|---|---|---|
| X | CN 108682855 A (SOOCHOW UNIVERSITY) 19 October 2018 (2018-10-19) description, paragraphs 7-24, and figure 8 | 1-10 |
| A | CN 102306771 A (CENTRAL SOUTH UNIVERSITY) 04 January 2012 (2012-01-04) entire description | 1-10 |
| A | CN 118164465 A (EAST CHINA UNIVERSITY OF SCIENCE AND TECHNOLOGY) 11 June 2024 (2024-06-11) entire description | 1-10 |
| A | CN 113745507 A (NORTHEAST NORMAL UNIVERSITY) 03 December 2021 (2021-12-03) entire description | 1-10 |
| A | US 2024258519 A1 (HINDUSTAN PETROLEUM CO., LTD.) 01 August 2024 (2024-08-01) entire description | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 June 2025** | **16 June 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/127764**

| Patent document cited in search report | | | Publication date (day/month/year) | Patent family member(s) | | | Publication date (day/month/year) |
|---|---|---|---|---|---|---|---|
| CN | 108682855 | A | 19 October 2018 | None | | | |
| CN | 102306771 | A | 04 January 2012 | None | | | |
| CN | 118164465 | A | 11 June 2024 | None | | | |
| CN | 113745507 | A | 03 December 2021 | CN | 113745507 | B | 30 January 2024 |
| US | 2024258519 | A1 | 01 August 2024 | KR | 20240115700 | A | 26 July 2024 |
| | | | | JP | 2024102783 | A | 31 July 2024 |
| | | | | JP | 7640608 | B2 | 05 March 2025 |
| | | | | AU | 2023203046 | A1 | 08 August 2024 |
| | | | | AU | 2023203046 | B2 | 13 March 2025 |
| | | | | EP | 4403516 | A1 | 24 July 2024 |

Form PCT/ISA/210 (patent family annex) (July 2022)